**Europäisches Patentamt**

**European Patent Office**

**Office européen des brevets**

(19)

(11) Publication number : **0 344 281 B1**

# (12) EUROPEAN PATENT SPECIFICATION

(45) Date of publication of patent specification :
**15.04.92 Bulletin 92/16**

(51) Int. Cl.⁵ : **G01D 5/38**

(21) Application number : **89900622.5**

(22) Date of filing : **12.12.88**

(86) International application number :
**PCT/GB88/01081**

(87) International publication number :
**WO 89/05440 15.06.89 Gazette 89/13**

(54) OPTO-ELECTRONIC SCALE-READING APPARATUS.

(30) Priority : **12.12.87 GB 8729066**

(43) Date of publication of application :
**06.12.89 Bulletin 89/49**

(45) Publication of the grant of the patent :
**15.04.92 Bulletin 92/16**

(84) Designated Contracting States :
**CH DE FR GB IT LI SE**

(56) References cited :
**DE-A- 2 451 994**
**DE-A- 2 511 350**

(73) Proprietor : **Renishaw plc**
**New Mills**
**Wotton-Under-Edge Gloucestershire GL12**
**8JR (GB)**

(72) Inventor : **STEPHENS, William, Frank, Noel**
**2 Sandpits Lane Hawkesbury Upton**
**Badminton Gloucestershire (GB)**

(74) Representative : **Jackson, John Timothy et al**
**Renishaw plc Patent Department New Mills**
**Wotton-under-Edge Gloucestershire GL12 8JR**
**(GB)**

## Description

This invention relates to opto-electronic scale-reading apparatus and is concerned with generating a quadrature signal for the purpose of determining the direction in which the scale is being read.

Such apparatus is known from GB 1,504,691 and comprises 3 gratings, one of which is provided by a scale. The other two gratings are situated in a readhead displaceable relative to the scale which also has a light source for illuminating the 3 gratings to generate a light modulation corresponding to relative displacement of the scale and readhead. Means are also provided for generating a plurality of phase-shifted such modulations, in order to determine the direction of relative displacement.

The known phase-separating means may, for example, be in the form two of said grating means being angularly offset to generate moire fringes constituting said phases of the modulation.

It is a disadvantage of the known apparatus that the different phases are derived from different regions of the scale. Therefore variation in the quality of the scale, e.g. different reflectivities, lead to different qualities in the respective phases and consequently to errors in the quadrature signal.

The present invention is specified in claims 1 and 14 hereto wherein the above difficulties are overcome essentially by the generation of phase-separated secondary orders of diffraction. As a result the light defining the respective phases emanates from a common region of the scale and insofar light paths emanating from that common region have different directions, it is nevertheless the case that each phase is built up of light from each of those differently directed paths.

Examples of apparatus according to this invention will now be described with reference to the accompanying drawings wherein:-

Fig. 1 is an elevation of a first example of the apparatus.

Fig. 2 shows a part of Fig. 1 to an enlarged scale.

Fig. 3 is a view on the line III-III in Fig. 2.

Fig. 4 is a view on the line IV-IV in Fig. 2.

Fig. 5 is an elevation of a second example of the apparatus.

Fig. 6 is an elevation of a third example of the apparatus.

Fig. 7 is a plan view of Fig. 6.

Fig. 8 is a schematic view of a fourth example.

Fig. 9 is a schematic view of a fifth example.

Fig.10 is a schematic view of a sixth example.

Fig.11 is a plan view of Fig. 10.

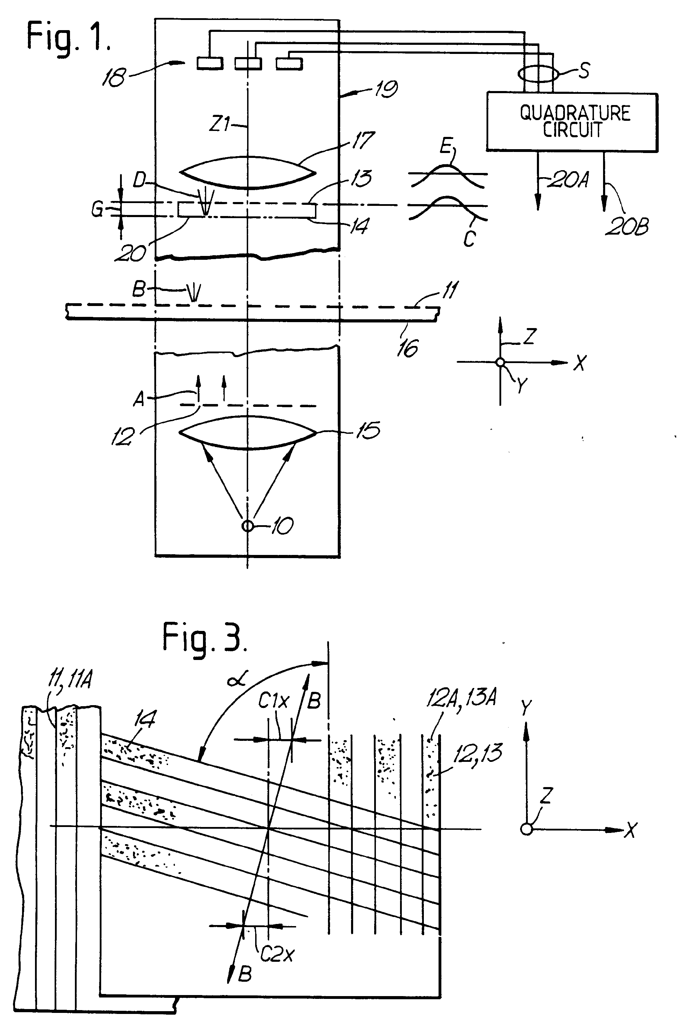

Referring to Fig. 1, light from a source 10 is collimated by a lens 15 and illuminates a scale defined by a first grating 11 provided on an elongate transparent body 16. Between the lens 15 and the first grating 11 there is arranged a second grating 12 which divides the collimated light into a periodic light pattern A. The light from the source 10 may be non-coherent. The first grating 11 diffracts the light from the pattern A into primary orders B which generate a set of fringes C at the plane A-A of a third or analyser grating 13. A fourth grating 14 is introduced between the first grating 11 and the third grating 13 at a given distance G from the latter grating. A lens 17 at the far side of the grating 13 focusses the light emerging from the grating 13 onto a system 18 of opto-electronic transducers. The light source 10 and the gratings 12, 13, 14 are embodied in a readhead 19 which is movable relative to the grating 11 in the direction of the length of the body 16. In operation, the movement of the readhead 19 causes the fringes C to move across the grating 13 and give rise to a sinusoidal light modulation E at the far side of the grating 13. Having regard to the three mutually perpendicular directions X, Y, Z, the grating 11, 12, 13, 14 extend in XY planes spaced in the direction Z. The lines, e.g. 13A (Fig. 3) of the grating 11, 12, 13 extend in the direction Y.

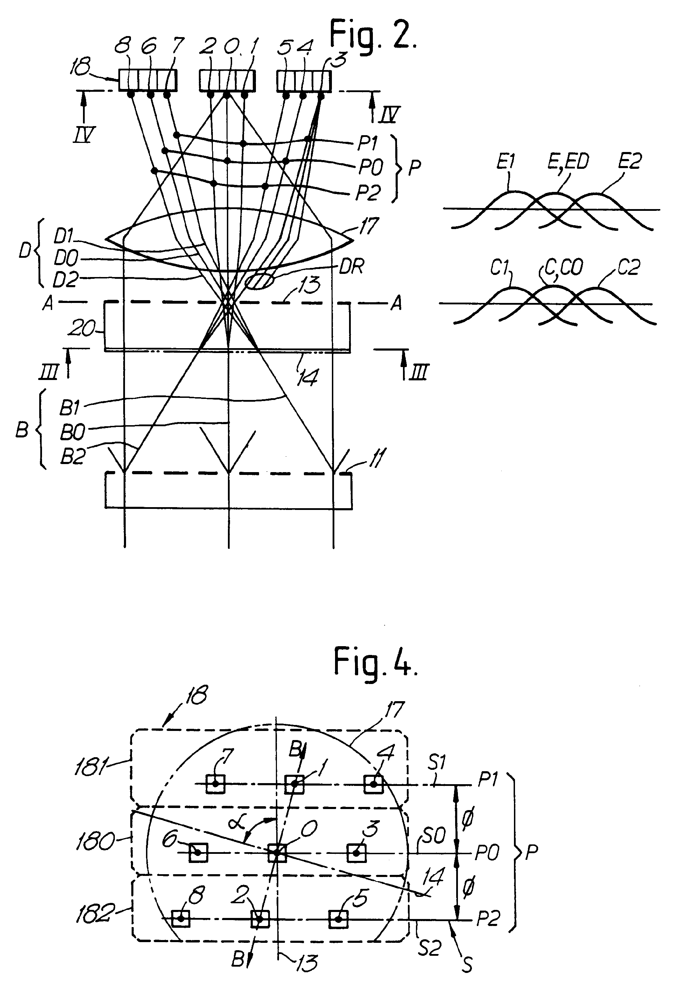

The grating 14 is a beam splitter (Fig. 2) which divides each primary order B approaching the grating 13 into a group of secondary orders D. Thus each of three primary orders B0, B1, B2 is divided into a group comprising of three secondary orders D0, D1, D2, so that there are three such groups defining altogether nine secondary orders, each of which has its own unique direction but which are grouped in three phases P0, P1, P2. Accordingly, the fringes C occur in three phases C0, C1, C2, and the modulations E occur in three phases E0, E1, E2.

A decollimating lens 17 is arranged to focus the nine modulated secondary orders D to respective nine foci or light signals 0-8. In other words, each secondary order comprises a group of rays, e.g. DR, having the same direction and which converge on to the same one, e.g. 4, of the foci 0-8. In other words, the lens 17 collects like order D at the respective foci 0-8. It will be clear that each focus 0-8 receives light from the whole of the region covered by the lens 17, i.e. from the whole of the region of the scale seen by the lens.

As shown in Fig. 4 the foci of those secondary orders which have the same phase are provided with a respective transducer of the system 18. Thus there are three transducers 180, 181, 182 having respective output signals S0, S1, S2, collectively denoted S, corresponding to the respective phases P0, P1, P2. In the particular case of the gratings 11, 12, 13, 14 being Ronchi gratings, the inner signals 0, 1, 2 of the respective phases P0, P1, P2 are not modulated. However, such modulation does occur if phase gratings are used. This is described later herein.

The gratings 13,14 are provided at opposite sides of a glass plate 20 (Fig. 2, 3) but, whereas the gratings 11, 12, 13 define spaced lines 11A, 12A, 13A respectively, all extending in the direction Y, the grating 14 defines spaced line 14A extending at an angle α to those of the other gratings thereby effecting the separation of the phases P0,P1,P2. The diffracting effect of the grating 14 at the angle α creates the fringes C1, C2 to opposite sides of the fringes C0 along a line B-B normal to the lines of the grating 14. The components C1x, C2x of this displacement in the direction normal to the lines of the grating 13 constitutes the separation of the phases P0, P1, P2.

The thickness of the plate 20 defines the separation G of the gratings 13,14 and is related to the angle α in accordance with the expression:

$$\tan \alpha = \Delta G / (G \times \Delta \alpha) \quad (1)$$

where $\Delta G$ and $\Delta \alpha$ are given manufacturing tolerances and the angle α is the optimum angle for minimum phase error. For example, for a thickness G of 1mm having a tolerance $\Delta G$ of 0.05mm, and a tolerance $\Delta \alpha$ of 0.1°, the angle α is approximately 88°. This produces a good separation of the foci 0 to 8 as shown in Fig. 4. Minor adjustments of the angle α or the thickness G may be made to achieve a given phase separation $\phi$.

The separation $\phi$ is expressed (in radians) by:

$$\phi = (2\pi G \lambda \cos \alpha) / (D3 \times D4) \quad (2)$$

wherein:-

$\lambda$ = wave length of light

D3 = pitch of grating 13

D4 = " " " 14

While the gratings 11, 12, 13 may be Ronchi gratings, the grating 14 may be a phase grating because of the importance of concentrating light equally between the secondary different diffraction orders. This can more easily be achieved with a phase grating by appropriate dimensioning of its profile.

The grating 14 may be situated anywhere in the light path between the gratings 12, 13 but it is advantageous for the grating 14 to be situated close to the one or the another of the gratings 12,13 because then the gratings 12,14 or 13,14, as the case may be can be provided at opposite sides of the same glass plate. Also, if the gratings 12,14 or 13,14 are relatively close together, a relatively large said angle α as obtainable as will be seen from expression (1) above.

The output signals S of the transducers 18 (Fig. 1) vary sinusoidally and have a phase difference which in this case is 120°. The signals S are connected to a quadrature circuit 20 being a circuit, known per se, for processing such signals with a view to obtaining an accurate sine signal 20A each cycle of which represents a relative dispacement between the readhead 19 and the grating 11 by one pitch thereof or an integer multiple of that pitch. The circuit 20 also produces a cosine signal 20B corresponding to the sine signal 20A and required for determining the direction of said displacement. An example of a circuit such as the circuit 20 is shown in our International Patent Publication No. WO 87/07943.

In the present example the grating 11 is transmissive and the gratings are arranged for the light to interact in succession with the gratings 12, 11, 14 and 13. That is, the grating generating the periodic light pattern is first; the grating defining the scale is second and, in this case, also generates the primary diffraction orders; the grating generating the secondary order is third; and the grating generating the light modulation is last. In this arrangement, and with the first grating 11 being equidistant between the second and third gratings, there is obtained an "optical lever" effect whereby the rate of displacement of the fringes relative to the grating 13 is twice that of the readhead 19 relative to the grating 11 with the advantage that two signals S are obtained for every reading of one pitch of the grating 11.

Referring to the three phases P0, P1, P2 (Fig. 4), as mentioned, with the use of Ronchi gratings the inner signals 0, 1, 2 are not modulated, i.e. they merely define a relatively steady light level. In a modification, all the gratings 11, 12, 13, 14 are phase gratings whereby the inner signals 0, 1, 2 also become modulated. Such modulation may occur in antiphase with the outer signals 3,6; 4,7; and 5,8 respectively if the mark-space ratio of the phase gratings is 1:1. In that case, arrangement is made, in each phase, to sum the outer two signals, e.g. 5,8, and combine them in push-pull order with the inner signal, e.g. 2, whereby a good sign wave, without a DC component, is obtainable. Alternatively, the intermediate phase P0 is eliminated by suitable dimensioning of the profile of the grating 14. These modifications result in improved efficiency.

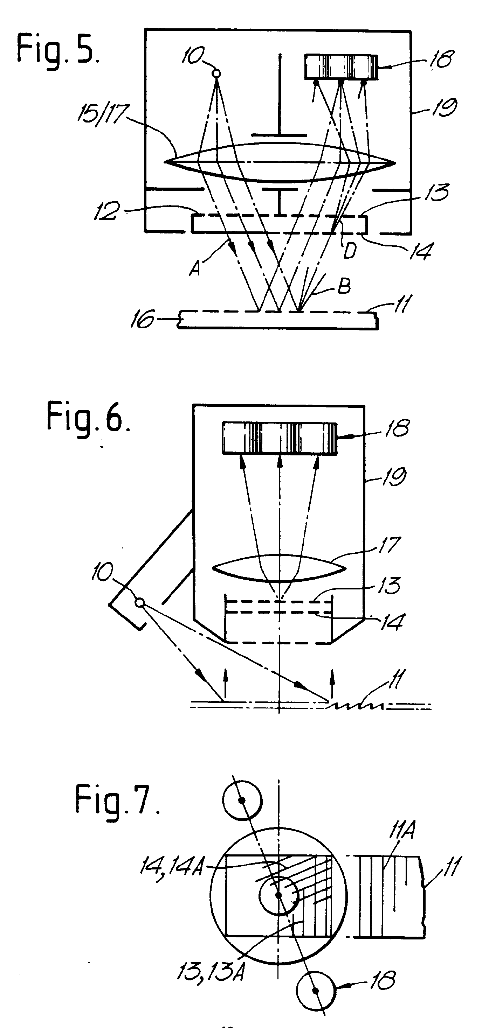

The second example, shown in Fig. 5, is equivalent to that shown in Fig. 1 in that the gratings are arranged for the light to interact in succession with the gratings 12, 11, 14 and 13. In other respects, the example of Fig. 5 differs as follows. The gratings 12, 14, 13 are provided on a single plate of glass as shown and a single lens 15/17 is arranged for one half therof to collimate the light from the source 10 and for the other half thereof to decollimate the secondary orders and distribute the respective phases on to the transducers 180, 181, 182.

The third example, shown in Figs. 6 and 7, differs from the first and second examples in that the gratings are arranged for the light to interact in succession with the gratings 11, 12, 14 and 13 so that the above mentioned optical lever effect is not obtained. Also, in the present example, the grating 11 is reflective and is a blazed grating profiled to reflect the light from the source 10 into the readhead 19. The lens 17, which covers the whole of the aperture of the readhead, distributes the respective phases on to the transducers 180, 181, 182.

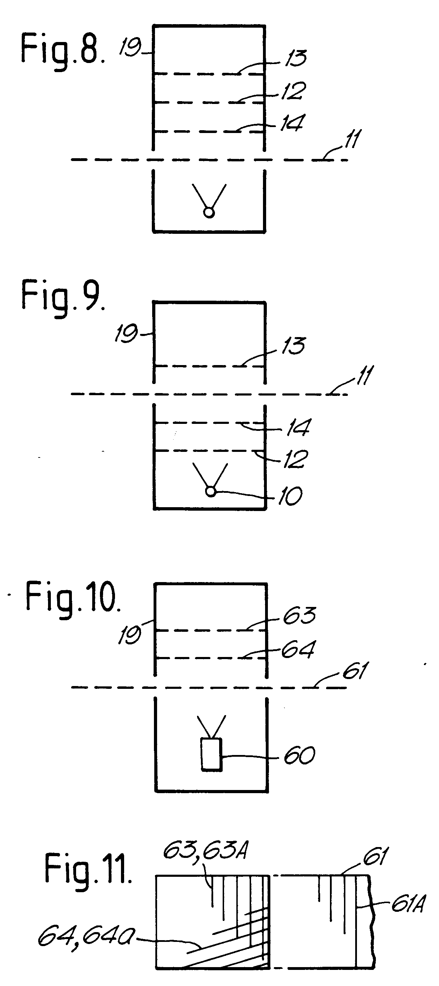

In the fourth example, shown in Fig. 8, the gratings are arranged for the light to interact in succession with the gratings 11, 14, 12, and 13.

In the fifth example shown in Fig. 9 the gratings are arranged for the light to interact in succession with the gratings 12, 14, 11 and 13.

In the sixth example, shown in Fig. 10, the light used is coherent such as from a laser 60. In this case the basic apparatus requires only two gratings, that is a grating 61 defining the scale and a grating 63 for generating the light modulation. One of the gratings 61 or 63, when illuminated by the laser 60, will produce the primary interference fringes in the plane of the other grating, 63 or 61. The lines of the gratings 61, 63 have the same direction. The grating for generating the phase seperation, here denoted 64, constitutes a third grating arranged between the gratings 61, 63 and having lines lying at angle to those of the gratings 61, 63 substantially as described with reference to the gratings 14, 13 of Figs. 1 to 4.

In the examples described there are essentially three gratings which may be referred to as a primary, a secondary and a tertiary grating and which occur in the order of the numerals 11, 14, 13 (Figs. 1 or 5) or 12, 14, 13 (Fig. 6) or 14, 12, 13 (Fig. 8) or 14, 11, 13 (Fig. 9) or 61, 64, 63 (Fig. 10). In these arrangements the primary grating 11, 12, 14, 14 or 61 generates the primary orders of diffraction B, the primary grating and the secondary grating 14, 14, 12, 11 or 64 are angularly offset relative to each other so that phase-separated secondary orders of diffraction D are generated by the secondary grating, the primary and secondary gratings cooperate to generate diffraction fringes C separated in phases P corresponding to those of the secondary orders, at least one of the primary and secondary gratings is supported for movement relative to the tertiary grating 13 or 63, and the tertiary grating is positioned so that such movement is readable by detection of the light modulations generated by the corresponding relative movement between the fringes and the tertiary grating.

**Claims**

1. Opto-electronic apparatus comprising scale (11), and a readhead (19) movable relative to the scale (11) in a measuring direction (x), the scale (11) and readhead (19) comprising:
first, second, and third grating means (11,12,13) each defined by a series of spaced apart parallel lines (11A,12A,13A) extending substantially perpendicular to said measuring direction (x);
a light source (10) positioned to sequentially illuminate said first, second, and third gratings means (11,12,13);
one of said gratings means (11,12,13) being provided by the scale (11), the others (12,13) of said grating means being provided in said readhead (19);

relative movement of the scale (11) and readhead (19) causing a light modulation downbeam of the third grating means (13);
phase-separating means for separating said modulation into a plurality of phases, characterised in that; said phase-separating means comprises a beam splitter (14) provided between said first (11) and third (13) grating means.

2. Apparatus according to claim 1 wherein said beam splitter is provided by a diffraction grating (14).

3. Apparatus according to claim 2 wherein the lines (14A) of said diffraction grating extend at an angle ($\alpha$) to the lines (11A,12A,13A) of the first, second and third grating means (11,12,13).

4. Apparatus according to claim 3 wherein said angle ($\alpha$) is determined by the expression:
$$\tan \alpha \ = \ \Delta G/ (G \times \Delta\alpha)$$
wherein
$\alpha$ = said angle,
G = the distance between the diffraction grating (14) and the one of the first, second and third grating means (11,12,13) nearest thereto.
$\Delta\alpha$ = a manufacturing tolerance for the angle $\alpha$
$\Delta G$ = a manufacturing tolerance for the distance G.

5. Apparatus according to claim 3 or claim 4 wherein said angle ($\alpha$) is less than 90 degrees.

6. Apparatus according to any one of claims 2 to 5 wherein the diffraction grating (14) is a phase grating.

7. Apparatus according to any one of claims 2 to 6 wherein the first (12) and third (13) grating means, and said diffraction grating (14) are provided on a single plate of glass.

8. Apparatus according to any one of claims 2 to 7 wherein the diffraction grating (14) is positioned between the second (11;12) and third (13) grating means.

9. Apparatus according to claim 8 wherein the first (12;11) and second (11;12) grating means cooperate to generate a set of primary diffraction orders (c) and said diffraction grating (14) generates from each of said primary orders (c) a set of secondary diffraction orders (D0,D1,D2).

10. Apparatus according to any one of claims 2 to 7 wherein the diffraction grating (14) is positioned between the first (11) and second (12) grating means.

11. Apparatus according to claim 10 wherein said first grating means (11) and said diffraction grating (14) cooperate to generate a set of primary diffraction orders (c) and said second grating means generates from each of said primary orders a set of secondary diffraction orders (D0,D1,D2).

12. Apparatus according to any one of the preceding claims wherein said second grating means is provided by said scale (11).

13. Apparatus according to any one of claims 1 to 6 or 8 to 12 wherein said first grating means is provided by said scale (11).

14. Opto-electronic scale-reading apparatus comprising:

first grating means (61) defining a scale, a readhead (19) adapted for displacement relative to the scale (61),

second grating means (63) provided on the readhead (19),

a source (60) of coherent light provided on the readhead (19) for illuminating one of the first (61) and second (63) grating means for generating interference fringes in the plane of the other one of the first (61) and second (63) grating means,

said interference fringes having movement relative to said other one of the first (61) and second (63) grating means in accordance with said displacement thereby to generate a corresponding light modulation,

said first and second grating means each having a periodic structure defined by spaced lines (61A,63A),

phase-separating means for separating said modulation into a plurality of phases for generating a quadrature signal of said modulation,

characterised by:

a diffraction grating (64) positioned between said first and second grating means,

the respective lines of said first and second grating means lying in a common direction, and

said diffraction grating (64) being defined by lines (64A) lying at an angle to said common direction thereby to effect said phase separation.

15. Opto-electronic scale-reading apparatus according to claim 14 wherein said light source (60) and said one of the first (61) and second (63) grating means cooperate for forming a set of primary diffraction orders, said diffractive (64) grating generating from each of said primary orders a set of secondary diffraction orders; and

the apparatus comprises means for collecting like orders of said sets of secondary orders, and

means for detecting said collected like orders.

16. Opto-electronic scale-reading apparatus according to claim 15 wherein said collecting means comprise a decollimating lens means for focusing said secondary orders having the same direction into a respective common focus.

17. Opto-electronic scale-reading apparatus according to claim 16 comprising transducer means for detecting the respective said foci.

**Patentansprüche**

1. Opto-elektronische Vorrichtung, welche umfaßt eine Skala (11) und einen relativ zur Skala (11) in einer Meßrichtung (x) bewegbaren Lesekopf (19), wobei die Skala (11) und der Lesekopf (19) umfassen:

erste, zweite und dritte Gittermittel (11, 12, 13), die jeweils durch eine Reihe von mit Abstand voneinander angebrachten parallelen Linien (11A, 12A, 13A) bestimmt sind, die sich im wesentlichen senkrecht zu der Meßrichtung (x) erstrecken;

eine Lichtquelle (10), die angeordnet ist, aufeinanderfolgend das erste, zweite und dritte Gittermittel (11, 12, 13) zu beleuchten;

wobei eines der Gittermittel (11, 12, 13) durch die Skala (11) gebildet ist, die anderen (12, 13) Gittermittel in dem Lesekopf (19) vorgesehen sind;

eine Relativbewegung der Skala (11) und des Lesekopfes (19) eine Lichtmodulation in Abstrahlrichtung von dem dritten Gittermittel (13) verursachen;

und Phasentrennmittel zum Auftrennen der Modulation in eine Vielzahl von Phasen, dadurch gekennzeichnet, daß:

das Phasentrennmittel einen zwischen dem ersten (11) und dem dritten (13) Gittermittel vorgesehenen Strahlenteiler (14) umfaßt.

2. Vorrichtung nach Anspruch 1, bei der der Strahlenteiler durch ein optisches Gitter (14) geschaffen ist.

3. Vorrichtung nach Anspruch 2, bei der die Linien (14A) des optischen Gitters sich mit einem Winkel ($\alpha$) zu den Linien (11A, 12A, 13A) des ersten, zweiten bzw. dritten Gittermittels (11, 12, 13) erstrecken.

4. Vorrichtung nach Anspruch 3, bei dem der Winkel ($\alpha$) bestimmt wird durch den Ausdruck:

$$\tan \alpha = \Delta G / (G \times \Delta\alpha)$$

wobei

$\alpha$ = der Winkel,

G = der Abstand zwischen dem optischen Gitter (14) und dem dazu nächsten ersten, zweiten oder dritten Gittermittel (11, 12, 13),

$\Delta\alpha$ = eine Herstelltoleranz für den Winkel $\alpha$,

$\Delta G$ = eine Herstelltoleranz für den Abstand G ist.

5. Vorrichtung nach Anspruch 3 oder 4, bei dem der Winkel ($\alpha$) kleiner als 90° ist.

6. Vorrichtung nach einem der Ansprüche 2 bis 5, wobei das optische Gitter (14) ein Phasengitter ist.

7. Vorrichtung nach einem der Ansprüche 2 bis 6, wobei das erste (12) und das dritte (13) Gittermittel und das optische Gitter (14) an einer einzigen Glasplatte vorgesehen sind.

8. Vorrichtung nach einem der Ansprüche 2 bis 7, wobei das optische Gitter (14) zwischen das zweite (11; 12) und dritte (13) Gittermittel eingesetzt ist.

9. Vorrichtung nach Anspruch 8, wobei das erste (12; 11) und das zweite (11; 12) Gittermittel zusammenwirken zur Erzeugung einer Reihe von primären Brechungsordnungen (C) und das optische Gitter (14) aus jeder der primären Ordnungen (c) eine Reihe von sekundären Brechungsordnungen (D0, D1, D2) erzeugt.

10. Vorrichtung nach einem der Ansprüche 2 bis 7, wobei das optische Gitter (14) zwischen das erste (11) und das zweite (12) Gittermittel eingesetzt ist.

11. Vorrichtung nach Anspruch 10, wobei das erste Gittermittel (11) und das optische Gitter (14) zusammenwirken zur Erzeugung einer Reihe von primären Brechnungsordnungen (c) und das zweite Gittermittel aus jeder primären Ordnung eine Reihe von sekundären Brechnungsordnungen (D0, D1, D2) erzeugt.

12. Vorrichtung nach einem der vorangehenden Ansprüche, wobei das zweite Gittermittel durch die Skala (11) geschaffen ist.

13. Vorrichtung nach einem der Ansprüche 1 bis 6 oder 8 bis 12, wobei das erste Gittermittel durch die Skala (11) geschaffen ist.

14. Opto-elektronische Skalenlesevorichtung, welche umfaßt:

eine Skala bestimmendes erstes Gittermittel (61), einen zur Versetzung relativ zur Skala (61) ausgelegten Lesekopf (19),

zweites, an dem Lesekopf (19) vorgesehenes Gittermittel (63),

eine an dem Lesekopf (19) vorgesehene Quelle (60) kohärenten Lichts zum Beleuchten eines von den ersten (61) und zweiten (63) Gittermitteln zur Erzeugung von Interferenzstreifen in der Ebene des jeweils anderen der ersten (61) und zweiten (63) Gittermittel,

wobei die Interferenzstreifen eine Bewegung relativ zu dem anderen der ersten (61) und zweiten (63) Gittermittel aufweisen entsprechend der Versetzung, um dadurch eine entsprechende Lichtmodulation zu erzeugen,

das erste und zweite Gittermittel jeweils eine durch mit Abstand voneinander vorgesehene Linien (61A, 63A) bestimmte periodische Struktur besitzen,

Phasentrennmittel zum Auftrennen der Modulation in eine Vielzahl von Phasen zur Erzeugung eines Phasenschiebe-Signals der Modulation,

dadurch gekennzeichnet, daß:

ein optisches Gitter (64) zwischen das erste und das zweite Gittermittel eingesetzt ist,

die jeweiligen Linien des ersten und des zweiten Gittermittels in einer gemeinsamen Richtung liegen, und

das optisches Gitter (64) bestimmt ist durch mit einem Winkel zu der gemeinsamen Richtung liegende Linien (64A), um dadurch die Phasen-Trennung zu bewirken.

15. Opto-elektronische Skalenlesevorrichtung nach Anspruch 14, bei der die Lichtquelle (60) und das eine der ersten (61) und zweiten (63) Gittermittel zusammenwirken zur Bildung einer Reihe von primären Brechungsordnungen, wobei das optisches Gitter (64) aus jeder primären Ordnung eine Reihe von sekundären Brechungsordnungen erzeugt; und

die Vorrichtung Mittel zum Sammeln gleicher Ordnungen der Reihen von sekundären Ordnungen umfaßt und

Mittel zum Erfassen der gesammelten gleichen Ordnungen.

16. Opto-elektronische Skalenlesevorrichtung nach Anspruch 15, bei der das Sammelmittel ein Dekollimations-Linsenmittel umfaßt zum Fokussieren der sekundären Ordnungen mit der gleichen Richtung in einen jeweiligen gemeinsamen Brennpunkt.

17. Opto-elektronische Skalenlesevorrichtung nach Anspruch 16, welche umfaßt Wandlermittel zum Erfassen des jeweiligen Brennpunkts.

**Revendications**

1. Dispositif opto-électronique comprenant une échelle (11), et une tête de lecture (19) pouvant se déplacer par rapport à l'échelle (11) dans une direction de mesure (x), l'échelle (11) et la tête de lecture (19) comprenant:

des premier, deuxième et troisième moyens formant réseaux (11, 12, 13) définis chacun par une série de lignes parallèles espacées les unes des autres (11A, 12A, 13A) s'étendant de manière sensiblement perpendiculaire par rapport à ladite direction de mesure (x),

une source lumineuse (10) positionnée pour éclairer de manière séquentielle lesdits premier, deuxième et troisième moyens formant réseaux (11, 12, 13),

un desdits moyens formant réseaux (11, 12, 13) étant constitué par l'échelle (11), les autres (12, 13) desdits moyens formant réseaux étant prévus dans ladite tête de lecture (19),

le mouvement relatif de l'échelle (11) et de la tête de lecture (19) provoquant une modulation lumineuse au-delà du troisième moyen formant réseau (13),

des moyens de séparation de phases pour séparer ladite modulation en une pluralité de phases, caractérisé en ce que:

ledit moyen de séparation de phases comprend un dispositif de fractionnement de faisceaux (14) prévu entre lesdits premier (11) et troisième (13) moyens formant réseaux.

2. Dispositif selon la revendication 1 caractérisé en ce que ledit dispositif de fractionnement de faisceaux est constitué par un réseau de diffraction (14).

3. Dispositif selon la revendication 2 caractérisé en ce que les lignes (14A) dudit réseau de diffraction s'étendent de manière à former un angle (α) par rapport aux lignes (11A, 12A, 13A) des premier, deuxième et troisième moyens formant réseaux (11, 12, 13).

4. Dispositif selon la revendication 3 caractérisé en ce que ledit angle (α) est déterminé par l'expression:

$$\tan \alpha \ = \ \Delta G / \ (G \times \Delta \alpha)$$

où:

α = ledit angle

G = la distance entre le réseau de diffraction (14) et celui des premier, deuxième et troisième moyens formant réseaux (11, 12, 13) situé le plus près de ce réseau de diffraction.

$\Delta\alpha$ = tolérance de fabrication pour l'angle

$\Delta G$ = tolérance de fabrication pour la distance G.

5. Dispositif selon la revendication 3 ou la revendication 4 caractérisé en ce que ledit angle ($\alpha$) est inférieur à 90 degrés.

6. Dispositif selon l'une quelconque des revendications 2 à 5 caractérisé en ce que le réseau de diffraction (14) est un réseau de phase.

7. Dispositif selon l'une quelconque des revendications 2 à 6 caractérisé en ce que les premier (12) et troisième (13) moyens formant réseaux, et ledit réseau de diffraction (14) sont prévus sur une seule plaque de verre.

8. Dispositif selon l'une quelconque des revendications 2 à 7 caractérisé en ce que le réseau de diffraction (14) est positionné entre les deuxième (11;12) et troisième (13) moyens formant réseaux.

9. Dispositif selon la revendication 8 caractérisé en ce que les premiers (12;11) et deuxièmes (11;12) moyens formant réseaux coopèrent pour générer un ensemble d'ordres de diffraction primaires (c) et en ce que ledit réseau de diffraction (14) génère à partir de chacun desdits ordres primaires (c) un ensemble d'ordres de diffraction secondaires (D0, D1, D2).

10. Dispositif selon l'une quelconque des revendications 2 à 7 caractérisé en ce que le réseau de diffraction (14) est positionné entre le premier (11) et le deuxième (12) moyen formant réseau.

11. Dispositif selon la revendication 10 caractérisé en ce que ledit premier moyen formant réseau (11) et ledit réseau de diffraction (14) coopèrent pour générer un ensemble d'ordres de diffraction primaires (c) et en ce que ledit deuxième moyen formant réseau génère, à partir de chacun desdits ordres primaires, un ensemble d'ordres de diffraction secondaires (D0, D1, D2).

12. Dispositif selon l'une quelconque des revendications précédentes caractérisé en ce que ledit deuxième moyen formant réseau est constitué par ladite échelle (11).

13. Dispositif selon l'une quelconque des revendications 1 à 6 ou 8 à 12 caractérisé en ce que ledit premier moyen formant réseau est constitué par ladite échelle (11).

14. Dispositif de lecture d'échelle opto-électronique comprenant:

un premier moyen formant réseau (61) définissant une échelle, une tête de lecture (19) prévue pour se déplacer par rapport à l'échelle (61),

un deuxième moyen formant réseau (63) prévu sur la tête de lecture (19),

une source (60) de lumière cohérente prévue sur la tête de lecture (19) pour éclairer l'un des premier (61) et deuxième (63) moyens formant réseaux pour générer des franges d'interférence dans le plan de l'autre des premier (61) et deuxième (63) moyens formant réseaux,

lesdites franges d'interférence étant en mouvement par rapport à l'autre desdits premier (61) et deuxième (63) moyens formant réseaux en fonction dudit déplacement pour générer une modulation lumineuse correspondante,

lesdits premier et deuxième moyens formant réseaux présentant,chacun,une structure périodique définie par des lignes espacées (61A, 63A),

des moyens de séparation de phases pour séparer ladite modulation en une pluralité de phases pour générer un signal en quadrature de ladite modulation,

caractérisé par:

un réseau de diffraction (64) positionné entre lesdits premier et deuxième moyens formant réseaux,

les lignes respectives desdits premier et deuxième moyens formant réseaux situées dans une direction commune, et

ledit réseau de diffraction (64) étant défini par des lignes (64A) formant un angle par rapport à ladite direction commune pour effectuer ainsi ladite séparation de phase.

15. Dispositif de lecture d'échelle opto-électronique selon la revendication 14 caractérisé en ce que ladite source lumineuse (60) et l'un desdits premier (61) et deuxième (63) moyens formant réseaux coopèrent pour former un ensemble d'ordres de diffraction primaires, ledit réseau de diffraction (64) générant, à partir de chacun desdits ordres primaires, un ensemble d'ordres de diffraction secondaires; et

en ce que le dispositif comprend des moyens pour collecter les ordres semblables desdits ensembles d'ordres secondaires, et

des moyens pour détecter lesdits ordres semblables collectés.

16. Dispositif de lecture d'échelle opto-électronique selon la revendication 15 caractérisé en ce que ledit moyen de collection comprend un moyen formant lentille de décollimation pour focaliser lesdits ordres secondaires présentant la même direction en un foyer commun respectif.

17. Dispositif de lecture d'échelle opto-électronique selon la revendication 16 comprenant un moyen formant transducteur pour détecter lesdits foyers respectifs.

**Fig. 1.**

QUADRATURE
CIRCUIT

**Fig. 3.**

Fig. 2.

Fig. 4.

Fig. 5.

Fig. 6.

Fig. 7.

Fig.8.

Fig.9.

Fig.10.

Fig.11.